# EUROPÄISCHE PATENTANMELDUNG

(11) **EP 2 682 377 A2**
(43) Veröffentlichungstag der Anmeldung: **08.01.2014**
(21) Anmeldenummer: 13175578.7
(22) Anmeldetag: 08.07.2013
(51) Int. Cl.: C04B 41/64

(54) **Mittel zur Verbesserung der wärmedammenden Eigenschaften von anorganischen Materialien**

(30) Priorität: 06.07.2012 CH 10502012
(71) Anmelder: Ruhlmann, Robert, 4054 Basel (CH); Ruhlmann, Anne, 4054 Basel (CH)
(72) Erfinder: Ruhlmann, Robert, 4054 Basel (CH); Sütterlin, Alfons, 79415 Bad Bellingen (DE)
(74) Vertreter: Buntz, Gerhard

(57) **Zusammenfassung**

Vorgeschlagen wird ein Mittel und ein Verfahren zur Verbesserung der wärmedämmenden Eigenschaften von anorganischen Materialien auf Basis von Alkyltrialkoxysilanen oder deren Ankondensationsprodukten, wobei das Mittel mindestens ein Alkyltrialkoxysilan mit 3 bis 18 Kohlenstoffatomen (C) im Alkylrest und je 1 bis 3 Kohlenstoffatomen (C) in den Alkylresten oder Ankondensationsprodukten enthält, die im Durchschnitt noch 0 bis 2 Alkoxyreste pro Siliciumatom enthalten, zusammen mit mindestens einer weiteren Komponente, die gewählt ist aus (i) einem Alkohol oder einem Kohlenwasserstoff oder Kohlenwasserstoffgemisch als Lösungsmittel und (ii) mindestens einem Kiselsäureester der erfindungsgemässen Formel. Insbesondere kann das Mittel mindestens einen Hydrolysekatalysator enthalten.

## Beschreibung

### Gebiet der Erfindung

Die Erfindung bezieht sich auf ein Mittel zur Verbesserung der wärmedämmenden Eigenschaften von anorganischen Materialen, insbesondere von Mauerwerken, Beton und Fassadenaussenputze auf Basis von Alkyltrialkoxysilanen oder deren Ankondensationsprodukte.

### Hintergrund der Erfindung

In der Bauphysik wird bei der Dämmung typischerweise unter Wärmedämmung und Schalldämmung unterschieden. Wärmedämmung (auch Isolierung oder Wärmeisolierung) dient dazu, den Durchgang von Wärmeenergie durch eine Hülle zu reduzieren, um einen Bereich entweder vor Abkühlung oder Erwärmung zu schützen. Bei Gebäuden bezeichnet die Wärmedämmung meist der Verringerung des Wärmedurchgang durch die Aussenhülle des Gebäudes. Die Schalldämmung dient dagegen der Verhinderung bzw. die Behinderung der Schallwellenfortpflanzung durch eine Trennfläche. Die beiden Eigenschaften folgen unterschiedlichen physikalischen Prinzipien. Häufig werden die schalldämmende und wärmedämmende Eigenschaften jedoch bei der Dämmstoffauswahl zur Dämmung eines Gebäudes gemeinsam betrachtet und entsprechend dem Verwendungsort und der Verwendungsart zu bewertet. Bei der Bewertung der Dämmeigenschaften ist jedoch zu beachten, dass die Dichte und der Dämm- bzw. Leitwert eines Dämmstoffs in einem engen Zusammenhang stehen. Typischerweise gilt, dass je geringer die Dichte des Dämmstoffs, desto höher ist sein Wärme-Dämmwert, während es für die Schalldämmung meist umgekehrt ist. Diese konkurrierenden Eigenschaften erschweren häufig sowohl die Bewertung als auch die Wahl der zu verwendenden Materialen, gerade bei den weiter unten angeführten Verbundsystemen.

Wärme kann durch drei Mechanismen übertragen werden: (i) Wärmeleitung: Dabei wird die Wärme durch die Bewegung von Molekülen weitergegeben. Stoffe mit hoher Dichte leiten Wärme meist besser als Stoffe mit einer geringen Dichte. Stahl leitet Wärme besser als Holz. Dämmen bedeutet, Molekülketten durch Wahl der Werkstoffe und konstruktive Anordnung zu verlängern oder zu unterbrechen; (ii) Wärmestrahlung: Dabei wird die Wärme durch elektromagnetische Wellen weitergegeben, deren Übertragung durch zwei Faktoren gemindert werden kann, namentlich durch einen möglichst niedrigen Emissionsgrad z.B. durch glatte, spiegelnde Flächen oder durch das Verringern der Oberflächentemperatur des zu dämmenden Körpers z.B. durch eine Isolierung; und (iii) Konvektion: Dabei wird die Wärme durch Strömungen in Gasen oder Flüssigkeiten transportiert. Wärmedämmung bedeutet, die Wärmeströmungen zu unterbrechen. Nach dem Prinzip der Wärmestrahlung funktionieren z.B. Rettungsdecken oder verspiegelte Fensterscheiben. Typische Dämmstoffe des Standes der Technik vereinigen häufig mehrere der vorgenannten Eigenschaften. Bekannte Strukturgeometrien bei Dämmstoffen sind u.a. Granulat, Faserwerkstoff und fester Schaum. Übliche Formen von Dämmstoffen sind Haufwerk, Faserverbundwerkstoff und textile Matten oder Platte. Typische bekannte Materialien für Dämmstoffe sind u.a. mineralische Fasern wie Steinwolle, Glaswolle; Fasern aus natürlichen organischen Materialien wie Holzfaserwerkstoff, Holzfaserdämmplatte, Zellstoffverbundelemente, Holzwolle, Zellulose, Hanf, Flachs, Kokos, Wolle, Schilfrohrplatten; künstliche organische Schäume wie Polyethylen, Polystyrol, Neopor, Polyurethan, Resolschaum; mineralische Schäume wie Porenbeton, Bimsstein, Perlite, Blähton, Blähglimmer, Calciumsilikat-Platten und Schaumglas; Zelluloseflocken zum Einblasen in Hohlräume und -dämmplatten , Hanf-Leichtlehm, Ceralith, Blähglas, Blähton (Thermosit: nicht mehr auf dem Markt, bei Renovierungen aber noch auffindbar), Kork; Vakuumdämmplatten; und Aerogel.

Bei der Schalldämmung unterscheidet man zwischen Luftschallschutz mit einem möglichst luftdichten Abschluss von Schallquelle und Aufpunkt (Verwendung von biegeweichen Trennflächen oder zweischaligen Konstruktionen) und Körperschallschutz, wobei eine elastische Schicht als Trennfläche verwendet wird. Gute Schalldämmung wird insbesondere durch massive Bauweise bzw. Entkoppelung von Bauteilen erreicht. Der Schallschutz im Hochbau ist beispielsweise durch DIN 4109 spezifiziert. Baustoffe mit guten schalltechnischen Eigenschaften sind z.B. Kokosfasern, Mineralwolle-Dämmstoff und Cellulose-Dämmstoff.

Bei Gebäudedämmung beruht die Wärmedämmung meist auf dem Prinzip des Einschlusses von Luft oder anderen Gasen in Hohlräume des Materials. Da die Gase sehr schlechte Wärmeleiter sind, wird damit die Wärmeleitfähigkeit der Dämmung verringert (U-Wert), d.h. die Wärmedämmung erhöht. Eine wesentliche Rolle für eine energetische Bauweise spielen die Dämmstoffe. Im Stande der Technik finden sich eine Fülle unterschiedlicher Materialien für alle Arten der Anwendung. Je nach Handelsform (Filze, Matten, Platten, Schütt- oder Einblasdämmstoffe), Belastbarkeit, Brandschutzverhalten, Wärmeleitzahl und anderen Eigenschaften eignen sich die Dämmmaterialen des Standes der Technik für unterschiedliche Anwendungen. Ebenfalls unterscheiden sich die Dämmstoffe je nach Herstellung und der verwendeten Materialien in Bezug auf ökologische und gesundheitliche Aspekte. Unter dem Aspekt ökologischer Anforderungen werden, falls möglich, natürliche Dämmstoffe bevorzugt eingesetzt.

Zur Wärmedämmung von Gebäuden werden im Stand der Technik häufig sogenannte Wärmedämmverbundsysteme eingesetzt. Wärmedämmverbundsystem (auch bekannt als Thermohaut oder Vollwärmeschutz) bezeichnen Systeme zum Dämmen von Gebäudeaussenwänden und seltener auch inneren Gebäudeelementen. Diese Systeme können ebenfalls den Aufbau unterirdischer Bauwerksteile wie Keller und Fundamente umfassen. Das Dämmmaterial, der sogenannte Dämmstoff, wird in Form von Platten oder Lamellen z.B. durch Kleben und/oder Dübeln (Tellerdübel) auf dem bestehenden Wanduntergrund aus Ziegel, Kalksandstein oder Beton befestigt und mit einer armierenden Schicht versehen. Die Armierungsschicht besteht aus einem Armierungsmörtel (Unterputz), in den ein Gewebe eingebettet wird, das als Armierungsgewebe im oberen Drittel der Armierungsschicht liegt. Den Abschluss des Systems bildet ein Außenputz (Oberputz), der nach Erfordernis oder gestalterischem Aspekt noch angestrichen werden kann.

Insbesondere bei Wärmedämmverbundsystemen werden im Stand der Technik häufig Platten aus geschäumtem Polystyrol, Neopor, Polyurethan oder geschäumter Noeprenkautschuk EPDM verwendet. Polystyrol (auch Polystyren, Poly(1-phenylethan-1,2-diyl) ist ein transparenter, geschäumt weißer, amorpher oder teilkristalliner Thermoplast. Amorphes Polystyrol ist ein weit verbreiteter Kunststoff, der in vielen Bereichen der Technik zum Einsatz kommt. Polystyrol wird entweder als thermoplastisch verarbeitbarer Werkstoff oder als Schaumstoff (expandiertes Polystyrol-EPS) eingesetzt. Polystyrolschaumstoff ist auch bekannt unter den Namen Styropor, Styrodur, Austrotherm, Sagex, Hungarocell, Floormate, Jackodur, Lustron, Roofmate, Styrofoam, Telgopor und Frigolit etc.. Polystyrol hat gute Dämmeigenschaften mit einer Wärmeleitfähigkeit von 0,08 Wm⁻¹K⁻¹. Es ist gegen wässrige Laugen und Mineralsäuren gut beständig, hingegen gegenüber unpolaren Lösungsmitteln wie Benzin und längerkettigen Ketonen und Aldehyden nicht. Ein Nachteil von Polystyrol ist die eingeschränkte Temperaturbeständigkeit und die Neigung zu Spannungsrissen. Außerdem ist es UV-empfindlich. Ein weitere Nachteil des Polystyrol als Baustoff ist, dass die im Brandfall entstehenden Schwelgase neben Ruß auch gefährliche Zersetzungsprodukte wie Kohlenmonoxid, Kohlendioxid, Stickoxide und Styrol enthalten. Das Einatmen dieser Zersetzungsprodukte kann Gesundheitsschäden verursachen. Styrol kann bei Verschlucken und Eindringen in die Atemwege tödlich sein. Abtropfendes brennendes (Poly)Styrol kann zu einer Brandausbreitung durch Sekundärbrände führen. Zudem können sich bei Grossbränden Styropordämmplatten wie Brandbeschleuniger. Schliesslich wird Styropor bekanntlich aus Erdöl hergestellt, was als begrenzter Rohstoff auch ökologische Nachteile birgt.

Neopor ist ein weiterentwickelter Schaumstoff auf Basis von Schaumpolystyrol und ein Markenzeichen der BASF SE (Badische Anilin- & Soda-Fabrik). Die schwarzen Neopor Kügelchen enthalten als Rohgranulat Graphit und werden zu Schaumstoffblöcken, Platten oder Formteilen verarbeitet. Die Graphitpartikel dienen zur Streuung der Wärmestrahlung und sollen damit den Transport thermischer Energie innerhalb des Materials reduzieren. Eine Dämmplatte mit einer Rohdichte von 15 kg/m³ hat dabei eine Wärmeleitfähigkeit von 0,032 Wm⁻¹K⁻¹. Neopor hat ähnliche Nachteile wie Polystyrol. Allerdings zeigt es ein besseres Verhalten bei Bränden, da es zwar unter Flammenzugabe brennt, aber ohne Flamme nicht selbstständig weiter brennt.

Unter Polyurethane werden im Stand der Technik Kunststoffe oder Kunstharze verstanden, die aus der Polyadditionsreaktion von Dialkoholen (Diolen) beziehungsweise Polyolen mit Polyisocyanaten entstehen. Charakteristisch für Polyurethane ist die Urethan-Gruppe (-NH-CO-O-). Polyurethane können je nach Herstellung hart und spröde, aber auch weich und elastisch sein. Besonders die Elastomere weisen eine vergleichsweise hohe Reißfestigkeit auf. Polyurethan-Hartschaum wird u.a. als Isolier- und Dämmschicht in Sandwich-Elementen eingesetzt. Die Elemente bestehen aus einem inneren und äußeren Blech (Alu oder beschichtetes Stahlblech), wobei der Zwischenraum durch den aufquellenden Polyurethan-Schaum ausgefüllt wird. Diese Sandwichelemente können vorgefertigt werden und sind damit schnell zu montieren. Zudem kann Polyurethan Hartschaum im Kälteschutz verwendet werden, da dieser Schaum Dampfdiffusion bremst oder verhindert. Das zur Herstellung von Polyurethan notwendige Polyolen kann sowohl petrochemisch auf der Basis von Mineralöl wie auch oleochemisch auf der Basis von Pflanzenölen erfolgen. Trotzdem hat ebenfalls den Nachteil, dass zu seiner Herstellung entsprechend Rohstoffe benötigt werden. Ebenfalls was die Toxizität betrifft, besitzt Polyurethan Nachteile. Zwar besitzen sie in der Regel keine gesundheitsschädlichen Eigenschaften, wenn Polyurethan einmal ausreagiert ist und keine Monomere mehr enthaltet. Isocyanate können aber Allergien auslösen und stehen im Verdacht, Krebs zu verursachen. Das für einige Polyurethane verwendete Toluylendiisocyanat verdampft bei Raumtemperatur und kann beim Einatmen Schäden in der Lunge verursachen. Zudem könne die zur Herstellung der Hartschaums verwendeten Treibmittel neben ökologischen Problemen, auch toxische Nachteile haben.

Schliesslich ist Ethylen-Propylen-Dien-Kautschuk (EPDM, Ethylen-Propylen-Dien-Monomer) als terpolymeres Elastomer (Gummi) ein synthetischer Kautschuk. EPM (Ethylen-Propylen-Kautschuk) sowie EPDM gehören zu den statistischen Copolymeren mit gesättigtem Polymergerüst (nach DIN: M-Gruppe; im Gegensatz dazu gehören Kautschuke mit ungesättigter Kohlenwasserstoffkette zur R-Gruppe, wie z. B. NaturKautschuk NR, Styrol-Butadien-Kautschuk SBR). Die Vorteile von EPDM sind u.a. hohe Wetter- und Feuchtigkeitsbeständigkeit, und Ozonresistenz sowie hohe thermische Beständigkeit. Es zeigt eine vergleichsweise hohen Elastizität und guten chemischen Beständigkeit, weshalb es neben dem Dämmen auch für verschiedene Dichtungen wie z.B. O-Ringe bei Gleitringdichtungen oder auch Flachdichtungen verwendet. In der Form als geschäumter Elastomer besitzt EPDM ähnliche Wärmedämmeigenschaften wie Neopren-Kautschuk, aber auch die dort erwähnten Nachteile.

Beispiele für Anwendungen der vorgenannten Dämmmaterialen des Stand der Technik, insbesondere bei Wärmedämmverbundsystem können u.a. aus den Schriften DE 202010005698, EP1431473, EP1223261, DE4334138 oder DE69701638 entnommen werden. Die Nachteile der Wärmedämmverbundsystem liegen darin, dass typischerweise grosse Schichtdicken auf die Fassaden aufgeklebt werden müssen um gute Dämmwerte, d.h. niedrige U-Werte zu erhalten. Der Wärmedurchgangskoeffizient wird im Stand der Technik mit dem sog. U-Wert (früher k-Wert) angegeben und zeigt im statischen Zustand eines geschlossenen Systems (also ohne äußere Einwirkung wie z. B. Wind) an, wie viel Wärme in einer bestimmten Zeit pro Fläche durch ein bestimmtes Wandelement bei 1 Kelvin Temperaturgefälle dringt. Mit anderen Worten ist der Wärmedurchgangskoeffizient ein Mass für den Wärmestrom von einem Fluid (ein Gas oder eine Flüssigkeit) durch einen festen Körper (z.B. eine Wand) in ein zweites Fluid aufgrund eines Temperaturunterschiedes zwischen den Fluiden. Im Fall einer ebenen Wand gibt der Wärmedurchgangskoeffizient den Wärmestrom (Wärmeenergie pro Zeit) je Fläche der Wand und je Kelvin Temperaturunterschied der beiden Fluide an. Er wird in Einheiten von W/(m² K) gemessen.

Ein weiterer Nachteil der Dämmmaterialen des Standes der Technik, insbesondere in ihrer Anwendung bei Wärmedämmverbundsystem, ist, dass die Dampfdiffunsion so weit beeinflusst werden kann, dass es zur Schimmelbildung führt. Bei Dämmstoffen gibt der Wasserdampfdiffusionswiderstand an, in welchem Maß sie von Wasserdampf durchdrungen werden können. Dies ist (neben seiner Eigenschaft, Feuchte aufnehmen bzw. abweisen zu können) wichtig für den Einsatzort des Dämmstoffs. Dampfdichte Konstruktionen sind in Bereichen mit hohem Dampfdruck, also z. B. in Bädern und im Erdreich notwendig, während diffussionsoffene Dämmstoffe in der Nähe von organischen Materialien zu deren Schutz beitragen können. So kann bei diffussionsoffenen Dächern die eindringende Feuchte wieder abgegeben werden, während bei dampfdichten Dächern die Gefahr besteht, dass sich die Feuchte in der Holzkonstruktion anreichert und so langfristig zu deren Zerstörung beitragen kann. So liegt bei dieser Art der Dämmung eines der Probleme bei der Vermeidung von Tauwasserausfall in der Wand. Besonders im Winter sind Wasserdampfdruck und Temperatur innen hoch und außen niedrig. Abhängig von ihrer Temperatur kann Luft nur eine bestimmte maximale Feuchtigkeitsmenge aufnehmen, was mit dem Sättigungsdampfdruck beziehungsweise der Taupunkttemperatur angegeben wird. Durch den jeweiligen Aufbau der Wand werden Bedingungen sowohl für den Verlauf der Temperatur und damit des Sättigungsdampfdrucks als auch für den Verlauf des Dampfdrucks vorgegeben. Nur wenn im Wandquerschnitt der Dampfdruck stets unter dem Sättigungsdampfdruck liegt, kommt es nie zum Ausfall von Tauwasser. Bei mehrschichtigen Außenbauteilen wie bei Wärmedämmverbundsystemen, im speziellen Wärmedämmverbundsystemen mit den oben erwähnten Dämmmaterialien, ist deshalb die Tauwasserfreiheit grundsätzlich ein Problem, da bei derartigen Systemen die Wärmedämmfähigkeit nach außen hin zunimmt, der Wasserdampfdiffusionswiderstand häufig aber ebenfalls. Dies kann zu einem kritischen Tauwasserausfall führen an Stellen, wo das anfallende Tauwasser nur schlecht wieder verdunsten kann. So ist eine der Hauptursache für Schäden an Wärmedämmverbundsystemen der Ausfall von Tauwasser zwischen der Dämmung und dem Außenputz. Wenn dieses Tauwasser aufgrund des hohen Wasserdampfdiffusionswiderstands des Außenputzes und Anstrichs nicht vollständig verdunstet, kann es zu Abplatzungen durch gefrierendes Wasser und zur allmählichen Durchfeuchtung des Dämmstoffs kommen. Die Folgen sind eine Abnahme des Wärmedämmvermögens und Standsicherheitsprobleme, was einen vollständigen Abriss und Neuaufbau des Wärmedämmverbundsystems erfordern kann. Ein weiteres Problem liegt schliesslich in der Gefahr der Algenbildung auf Wärmedämmverbundsystemen. Typischerweise verringern Wärmedämmungen mit hoher Wärmespeicherfähigkeit die Gefahr der Algen- oder Pilzbildung, da dadurch erreicht wird, dass die Außenseiten der Wände möglichst langsam abkühlen. Durch die langsame Nachtabkühlung verringert sich die Zeit, in der die Temperatur der Bauteiloberfläche unter die der Umgebungstemperatur fällt und sich Kondensat auf der Putzoberfläche bilden kann. Algen wachsen, je nach Gattung, ab einer Feuchte von 70 %. Die oben beschriebenen Dämmmaterialien des Standes der Technik besitzen aber typischerweise eine schlechte Wärmespeicherfähigkeit. Um dem zu begegnen, werden deshalb bei diesen Systemen häufig mineralischen Dickputzen mit einer guten Wärmespeicherfähigkeit verwendet. Dies erfordert aber einen höheren Material- und Arbeitsaufwand. Schliesslich treffen bei Wärmedämmverbundsystemen durch die Art der Bauweise bedingt, verschiedene Materialien mit typischerweise unterschiedlichen Wärmedehnzahlen aufeinander. Ein Problem liegt deshalb auch bei der Gefahr von Spannungsrissen und Abplatzungen, vor allem bei sonnenbeschienenen Wänden.

### Aufgabe der Erfindung

Es ist eine Aufgabe der vorliegenden Erfindung, ein neues und besseres Verfahren und Mittel zur Verbesserung der wärmedämmenden Eigenschaften von anorganischen Materialien vorzuschlagen. Insbesondere soll dadurch bei bestehenden anorganischen Materialien wie Mauerwerk, Beton und Putze ohne grossen Aufwand der U-Wert verbessert werden. Das erfindungsgemässe Verfahren und Mittel soll die obenerwähnten Nachteile der Dämmmaterialen und Dämmsysteme des Standes der Technik nicht aufweisen und die Anwendung von entsprechender Dämmung verbessern und vereinfachen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

### Kurze Beschreibung der Erfindung

Insbesondere werden diese Ziele durch die Erfindung durch ein Mittel zur Verbesserung der wärmedämmenden Eigenschaften von anorganischen Materialien auf Basis von Alkyltrialkoxysilanen oder deren Ankondensationsprodukten erreicht, wobei das Mittel enthält:
a) mindestens ein Alkyltrialkoxysilan mit 3 bis 18 Kohlenstoffatomen (C) im Alkylrest und je 1 bis 3 Kohlenstoffatomen (C) in den Alkylresten oder Ankondensationsprodukten davon, die im Durchschnitt noch 0 bis 2 Alkoxyreste pro Siliciumatom enthalten, zusammen mit mindestens einer weiteren Komponente, die gewählt ist aus:
b) einem Alkohol oder einem Kohlenwasserstoff oder Kohlenwasserstoffgemisch als Lösungsmittel und c) mindestens einem Kiselsäureester der Formel 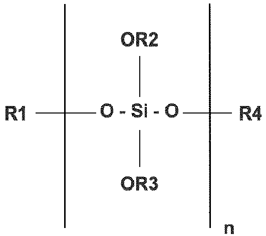 worin R1, R2, R3 und R4 gleiche oder verschiedene, gesättigte oder ungesättigte, aliphatische oder cycloaliphatische Reste, Arylreste oder Aralkylreste bedeuten und n einen Wert von 1 bis 10 hat. Die Erfindung hat insbesondere den Vorteil, dass mittels des erfindungsgemässen Mittels bzw. dessen Anwendung wesentlich bessere U-Werte erzielt werden können. Teilweise kann die Wärmedämmung bis zu 50% verbessert werden, ohne das zusätzlich Konstruktionen, wie z.B. Dämmplaten verbaut werden müssten. Da anorganische Materialien wie Beton typischerweise eine hohe Wärmespeicherfähigkeit im Vergleich zu den Dämmstoffen des Standes der Technik besitzen, wird die Gefahr der Algen- oder Pilzbildung verringert. Insbesondere werden auch Probleme basierend auf kritischen Tauwasserausfall, wie im Stand der Technik weiter oben beschreiben, bei der erfindungsgemässen Dämmverbesserung mittels der erfindungsgemässen Mittels, stark reduziert. Weiter zeigt das erfindungsgemässe Verfahren und Mittel ebenfalls grosse Vorteile beim benötigten Material- und/oder Zeitaufwand, sowie der Komplexität der Konstruktion und Verfahrens. Weiter sind die ökologischen Vorteile nicht nur bei der Herstellung der Dämmung, d.h. bei den benötigten Ressourcen wie die Rohstoffe zur Herstellung der Dämmstoffe, zu beachten, sondern auch bei einem allfälligen, späteren Entsorgen. Schliesslich werden mit dem erfindungsgemässe Verfahren und Mittel auch derartige Probleme verringert, wie z.B. die durch die Art der Bauweise der Wärmedämmverbundsysteme bedinge unterschiedliche Wärmedehnzahlen der verschiedenen Materialien verursachten. Damit liegt ein weiterer Vorteil der Erfindung darin, dass die Gefahr von Spannungsrissen und Abplatzungen, insbesondere bei sonnenbeschienenen Wänden, im Vergleich zu Wärmedämmverbundsysteme verringert werden kann bzw. in der Weise gar nicht besteht. Je nach Anwendungsgebiet kann es insbesondere zudem ein technischer Vorteil sein, dass sich mittels der erfindungsgemässen Verfahrens und Mittels Wärme- und Schaldämmeigenschaften eines Objektes oder Gebäudes isoliert spezifische verändern lassen, was bei den konkurrierenden Eigenschaften herkömmlicher Dämmmaterialen von Wärme- und Schalldämmung so nicht möglich ist. Als letzter Vorteil soll hier insbesondere darauf erweisen werden, dass mit dem erfindungsgemässen Mittel behandeltes anorganisches Material typischerweise im Brandfall die Nachteile herkömmlicher Dämmmaterialen wie die Toxizität und Brennbarkeit von Polystyrol etc. nicht aufweisen. Auch hat es die Vorteile, dass giftige Dämpfe bei Normaltemperatur, wie z.B. bei dem bei Polyurethane verwendeten Toluylendiisocyanat, nicht anfallen.

In einer Ausführungsvariante enthalten die Alkylreste der Komponente a) 3 bis 8 Kohlenstoffatome. In einer weiteren Ausführungsvariante enthält das Mittel 1 bis 50 Gew.-% Alkyltrialkoxysilan mit 3 bis 8 Kohlenstoffatomen im Alkylrest oder dessen bzw. deren Ankondensationsprodukt(e) und 1 bis 50 Gew.-% Kieselsäureester mit 1 bis 10 Kohlenstoffatomen im Alkylrest oder dessen bzw. deren Ankondensationsprodukt(e) sowie 0 bis 95 Gew.-% Alkohol oder Kohlenwasserstoff oder Kohlenwassertoffgemisch. In einer anderen Ausführungsvariante enthält das Mittel mindestens einen Hydrolysekatalysator enthält. Der Hydrolysekatalysator kann z.B. 0.1 bis 2% des Mittels sein. In einer weiteren Ausführungsvariante kann der Hydrolysekatalysator ein Salz aus einem Metall und einer Carbonsäure, eine gemischte metallorgansiche Verbindung, ein Titansäureester, ein Kieselsäureester, eine Säure oder eine basische organische Strickstoffverbindung sein. Dies können z.B. Verbindungen von Metallen sein, deren elektrochemische Spannungsreihe von Titan bis Blei reichen. Die Katalysatoren können z.B. Salze des Cadmiums, Titan, Zirkoniums, Zinns, Bleis, Mangans, Eisens und/oder Cobalt sein, wie z.B. Zinn(II)-octoat, Bleioctoat, Blaiaurat, Eisen(iii)-octoat, Eisen(ii)-stearat und/oder Cobaltnaphthenat. Die Katalysatoren könne beispielsweise auch gemischte metallische Verbindungen sein, wie z.B. Dibutylzinndilaurat und/oder Dibutylzinndiacetat. Als Titansäureester können z.B. Tetrapropylorthotitanat, Tetraisopropylorthotitanat und/oder Tertrabutylorthotitanat sein. Diese Ausführungsvarianten haben u.a. die gleichen Vorteile, wie die zuvor beschriebenen.

Die Erfindung betrifft insbesondere ein Verfahren zur Verbesserung der wärmedämmenden Eigenschaften von anorganischen Materialien unter Verwendung eines erfindungsgemässen Mittels auf Basis von Alkyltrialkoxysilanen und/oder deren ein oder mehreren Ankondensationsprodukten, wobei das Mittel durch Sprühen und/oder Fluten auf die zu behandelnden, anorganischen Materialien aufgebracht werden. Lose Sande und pulverförmige, anorganische Oxide können dabei z.B. in das erfindungsgemässe Mittel eingetaucht werden.

### Kurze Beschreibung der Zeichnung

Nachfolgend wird eine Ausführung der vorliegenden Erfindung anhand eines Beispiels beschrieben. Das Beispiel wird durch die beigelegte Figur illustriert.

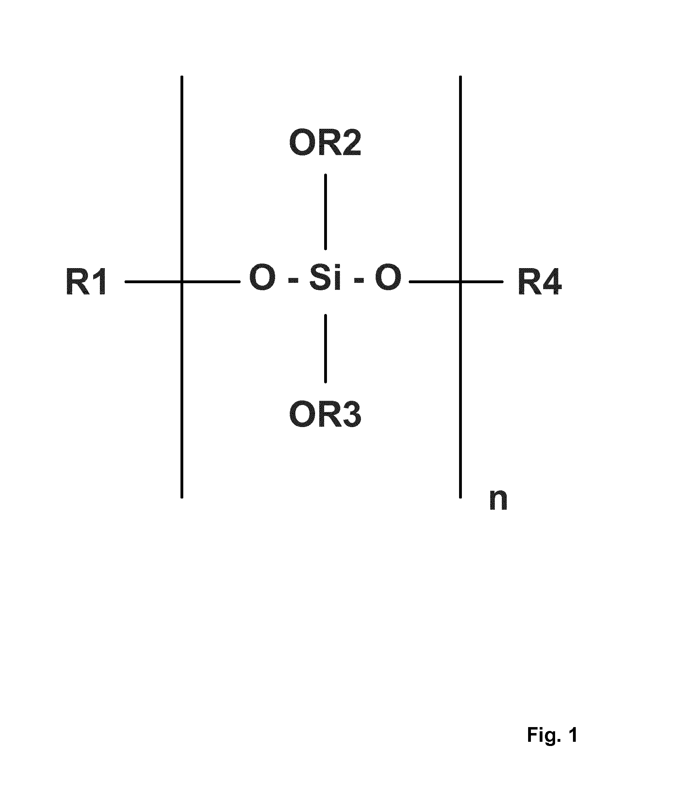

Figur 1 zeigt einen Kieselsäureester der Formel, wie sie beim erfindungsgemässen Mittel verwendet wird, wobei R1, R2, R3 und R4 gleiche oder verschiedene, gesättigte oder ungesättigte, aliphatische oder cycloaliphatische Reste, Arylreste oder Aralkylreste bezeichnen und n einen Wert von 1 bis 10 annehmen kann.

### Detaillierte Beschreibung einer bevorzugten Ausführungsvariante

Im einem Ausführungsbeispiel werden diese Ziele durch die Erfindung durch ein Mittel zur Verbesserung der wärmedämmenden Eigenschaften von anorganischen Materialien auf Basis von Alkyltrialkoxysilanen oder deren Ankondensationsprodukten erreicht, wobei das Mittel enthält:
a) mindestens ein Alkyltrialkoxysilan mit 3 bis 18 Kohlenstoffatomen (C) im Alkylrest und je 1 bis 3 Kohlenstoffatomen (C) in den Alkylresten oder Ankondensationsprodukten davon, die im Durchschnitt noch 0 bis 2 Alkoxyreste pro Siliciumatom enthalten, zusammen mit mindestens einer weiteren Komponente, die gewählt ist aus:
b) einem Alkohol oder einem Kohlenwasserstoff oder Kohlenwasserstoffgemisch als Lösungsmittel und c) mindestens einem Kiselsäureester der Formel 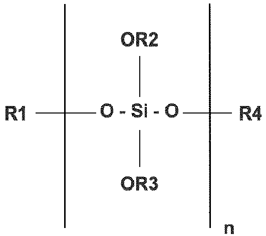 worin R1, R2, R3 und R4 gleiche oder verschiedene, gesättigte oder ungesättigte, aliphatische oder cycloaliphatische Reste, Arylreste oder Aralkylreste bedeuten und n einen Wert von 1 bis 10 hat. Als Ausführungsvariante enthalten die Alkylreste der Komponente a) 3 bis 8 Kohlenstoffatome.

Das Mittel kann 1 bis 50 Gew.-% Alkyltrialkoxysilan, insbesondere 15 bis 30 Gew.-%, mit 3 bis 8 Kohlenstoffatomen im Alkylrest oder dessen bzw. deren Ankondensationsprodukt(e) und 1 bis 50 Gew.-% Kieselsäureester mit 1 bis 10 Kohlenstoffatomen im Alkylrest oder dessen bzw. deren Ankondensationsprodukt(e) sowie 0 bis 95 Gew.-% Alkohol oder Kohlenwasserstoff oder Kohlenwassertoffgemisch enthalten. Als Lösungsmittel kommen, wie gesagt, Alkohole oder auch Kohlenwasserstoffe und/oder Kohlenwasserstoffgemische in Frage. Als Alkohole werden Alkanole mit 1 bis 3 Kohlenstoffatomen bevorzugt. Der oder die Alkohole können z.B. Ethanol umfassen. Bevorzugte Kohlenwasserstoffe sind z.B. Alkane mit einem Siedepunkt im Bereich von 120 bis 180 °C bei 1x10⁵ Pa absolut, wie z.B. n-Octan und/oder n-Nonan und/oder n-Decan und/oder verschiedene Isomere von davon und/oder Alkylbenzole sowie Styrol. Die Alkylbenzole können z.B. Toluol und/oder isomere Xylole und/oder isomere Trimethylbenzole umfassen. Geeignete Kohlenwasserstoffgemische sind Gemische mit einem Siedebereich von 155 bis 175 °C bei 1x10⁵ Pa absolut, die in einem Bereich von 99 Gew.-% aus aromatischen Kohlenwasserstoffen mit 9 oder 10 Kohlenstoffatomen bestehen. Ein solches Gemisch ist z.B. das Markenprodukt Deasol®99 der Firma Texaco Inc. Andere geeignete Kohlenwasserstoffgemische sind z.B. Testbenzin, das Markenprodukt Shellsol®A der Firma Shell und die sogenannten "White Spirits", auch als "Stoddard solvent" bezeichnet, ein Petroleumdestillat mit einem Flammpunkt von ca. 38 bis 43 °C, das die Kohlenwasserstoffe C₁₀H₂₂ bis C₁₅H₃₂ enthält.

Das erfindungsgemässe Mittel kann z.B. ausserdem mindestens einen Hydrolysekatalysator enthält. Der Hydrolysekatalysator kann z.B. 0.1 bis 2% des Mittels sein. In einer weiteren Ausführungsvariante kann der Hydrolysekatalysator ein Salz aus einem Metall und einer Carbonsäure, eine gemischte metallorgansiche Verbindung, ein Titansäureester, ein Kieselsäureester, eine Säure oder eine basische organische Strickstoffverbindung sein. Eine gemischte metallorgansiche Verbindung heisst, dass in der Verbindung mindestens ein organischer Rest über ein Kohlenstoffatom direkt an das Metallatom gebunden ist und mindestens ein Rest oder ein lon nicht über ein Kohlenstoffatom an das Metallatom gebunden ist. Dies können z.B. Verbindungen von Metallen sein, deren elektrochemische Spannungsreihe von Titan bis Blei reichen. Die Katalysatoren können z.B. Salze des Cadmiums, Titan, Zirkoniums, Zinns, Bleis, Mangans, Eisens und/oder Cobalt sein, wie z.B. Zinn(II)-octoat, Bleioctoat, Blaiaurat, Eisen(iii)-octoat, Eisen(ii)-stearat und/oder Cobaltnaphthenat. Das heisst, die ein oder mehreren Salze z.B. Zinn(II)-octoat und/oder Bleioctoat und/oder Blaiaurat und/oder Eisen(iii)-octoat und/oder Eisen(ii)-stearat und/oder Cobaltnaphthenat umfassen. Die Katalysatoren könne beispielsweise auch gemischte metallische Verbindungen sein, wie z.B. Dibutylzinndilaurat und/oder Dibutylzinndiacetat. Als Titansäureester können z.B. Tetrapropylorthotitanat, Tetraisopropylorthotitanat und/oder Tertrabutylorthotitanat sein.

Die beschriebenen erfindungsgemässen Mittel können zur Verbesserung der wärmedämmenden Eigenschaften der verschiedensten anorganischen Materialien, wie z.B. Beton oder andere Konststeine, Natursteine, Ziegel, lose Sande und pulverförmige oder feste anorganische Oxide, verwendet werden. Die Hydrolyse, der in alkoholischer Lösung und/oder Kohlenwasserstofflösung aufgebrachten Alkyltriakoxysilane erfolgt dabei auf dem behandelten Material von selbst. Die Erfindung betrifft deshalb insbesondere ein Verfahren zur Verbesserung der wärmedämmenden Eigenschaften von anorganischen Materialien unter Verwendung eines erfindungsgemässen Mittels auf Basis von Alkyltrialkoxysilanen und/oder deren ein oder mehreren Ankondensationsprodukten, wobei das Mittel durch Sprühen und/oder Fluten auf die zu behandelnden anorganischen Materialien aufgebracht werden. Lose Sande und pulverförmige, anorganische Oxide können dabei z.B. in das erfindungsgemässe Mittel eingetaucht werden. Streichen mittels Pinsel oder Roller kann für spezifische Anwendungen weniger geeignet sein, da derartige Applikationsverfahren bei festen Materialien geringere Eindringtiefen ergeben, als z.B. das Sprühen oder Fluten. Typischerweise tritt die volle Wirkung ca. 24 Stunden nach der Behandlung ein.

Das folgende Beispiel soll die Anwendung der Erfindung veranschaulichen. Es darf jedoch nicht als in irgendeiner Art einschränkend auf den Schutzbereich der Erfindung interpretiert werden.

In dem Beispiel wurde ein Probekörper von 25x25x10 cm aus Beton B35 und mit verschiedenen Putzsystemen mit dem erfindungsgemässen Mitteln behandelt, wobei 0.5 Liter des verwendeten Mittels pro m² - Oberfläche verwendet wurde. Nach einer Reaktionszeit von 28 Tagen wurde in einer Klimakammer U-Wert Messungen nach der Differenztemperaturmessung in Anlehnung an DIN 4108 (Deutsches Institut für Normung) durchgeführt. Verwendet wurde eine Lösung aus 5% monomerem Ethylsilikat, 25% polymerem Kieselsäureeter (n5-10), 35% Propyltriethoxysilan, 10% Oktyltriemetholxysilan, 25% Iso-Propanol. Diese ergab die Werte der folgenden Tabelle:

| ***Baustoff*** | ***U-Wert vor der Behandlung in W*/*m²K*** | ***U-Wert nach der Behandlung in W*/*m²K*** |
|---|---|---|
| Beton B35 (10cm) | 4.21 | 2.45 |
| Beton B35 (20cm) | 3.85 | 1.56 |
| Beton B35 (10cm) mit 3cm Kalkputz | 1.85 | 0.92 |
| Beton B35 (10cm) mit 6cm Kalkputz | 1.14 | 0.63 |
| Beton B35 (10cm) mit 3cm Kalkputz und Styrolkugeln | 0.93 | 0.55 |
| Beton B35 (10cm) mit 6cm Kalkputz und Styrolkugeln | 0.82 | 0.38 |

Die Beispiele zeigen, dass mittels des erfindungsgemässen Mittels bzw.
dessen Anwendung wesentlich bessere U-Werte erzielt werden können. Teilweise kann die Wärmedämmung bis zu 50% verbessert werden, ohne das zusätzlich Konstruktionen, wie z.B. Dämmplaten verbaut werden müssten.

Die Wirkung des erfindungsgemässen Mittels kann z.B. durch Zusatz von Kondensationskatalysatoren, wie z.B. der oben aufgeführten Kondensationskatalysatoren, weiter verbessert werden. Die optimale Zusammensetzung des erfindungsgemässen Mittels für die Behandlung eines spezifischen anorganischen Materials kann vom Fachmann gemässen den oben angeführten Bereichen spezifisch optimiert werden und/oder durch Vorversuche ermittelt werden.

## Patentansprüche

1. Mittel zur Verbesserung der wärmedämmenden Eigenschaften von anorganischen Materialien auf Basis von Alkyltrialkoxysilanen und/oder deren ein oder mehreren Ankondensationsprodukten, **dadurch gekennzeichnet, dass** es enthält:
a) mindestens ein Alkyltrialkoxysilan mit 3 bis 18 Kohlenstoffatomen (C) im Alkylrest und je 1 bis 3 Kohlenstoffatomen (C) in den Alkylresten oder Ankondensationsprodukten davon, die im Durchschnitt noch 0 bis 2 Alkoxyreste pro Siliciumatom enthalten, zusammen mit mindestens einer weiteren Komponente, die gewählt ist aus:
b) einem Alkohol und/oder einem Kohlenwasserstoff und/oder Kohlenwasserstoffgemisch als Lösungsmittel und
c) mindestens einem Kiselsäureester der Formel 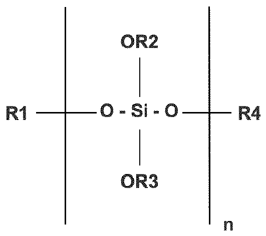 worin R1, R2, R3 und R4 gesättigte und/oder ungesättigte, aliphatische und/oder cycloaliphatische Reste, Arylreste und/oder Aralkylreste bedeuten und n einen Wert von 1 bis 10 hat.

2. Mittel nach Anspruch 1, **dadurch gekennzeichnet, dass** R1, R2, R3 und R4 gleiche, gesättigte und/oder ungesättigte, aliphatische und/oder cycloaliphatische Reste, Arylreste und/oder Aralkylreste bedeuten.

3. Mittel nach Anspruch 1, **dadurch gekennzeichnet, dass** R1, R2, R3 und R4 verschiedene, gesättigte und/oder ungesättigte, aliphatische und/oder cycloaliphatische Reste, Arylreste und/oder Aralkylreste bedeuten.

4. Mittel nach einem der Ansprüche 1 bis 3, **dadurch gekennzeichnet, dass** das Mittel 1 bis 50 Gew.-% Alkyltrialkoxysilan mit 3 bis 8 Kohlenstoffatomen im Alkylrest und/oder deren Ankondensationsprodukten und 1 bis 50 Gew.-% Kieselsäureester mit 1 bis 10 Kohlenstoffatomen im Alkylrest und/oder den ein oder mehreren Ankondensationsprodukten, sowie 0 bis 95 Gew.-% Alkohol oder Kohlenwasserstoff oder Kohlenwassertoffgemisch.

5. Mittel nach Anspruch 4, **dadurch gekennzeichnet, dass** das Mittel 15 bis 30 Gew.-% Alkyltrialkoxysilan mit 3 bis 8 Kohlenstoffatomen im Alkylrest und/oder deren Ankondensationsprodukten und 1 bis 50 Gew.-% Kieselsäureester mit 1 bis 10 Kohlenstoffatomen im Alkylrest und/oder den ein oder mehreren Ankondensationsprodukten, sowie 0 bis 95 Gew.-% Alkohol oder Kohlenwasserstoff oder Kohlenwassertoffgemisch.

6. Mittel nach einem der Ansprüche 1 bis 5, **dadurch gekennzeichnet, dass** das Lösungsmittel Alkohole umfasst, wobei der oder die Alkohole mindestens Alkanole mit 1 oder 3 Kohlenstoffatomen umfassen.

7. Mittel nach einem der Ansprüche 1 bis 6, **dadurch gekennzeichnet, dass** das Lösungsmittel Kohlenwasserstoffe umfasst, wobei die Kohlenwasserstoffe Alkane mit einem Siedepunkt im Bereich von 120 bis 180 °C bei 1x10⁵ Pa absolut umfassen.

8. Mittel nach Anspruch 7, **dadurch gekennzeichnet, dass** die Alkane n-Octan und/oder n-Nonan und/oder n-Decan und/oder verschiedene Isomere von d-Decan und/oder Alkylbenzole sowie Styrol umfassen.

9. Mittel nach einem der Ansprüche 1 bis 8, **dadurch gekennzeichnet, dass** das Lösungsmittel Kohlenwasserstoffgemische umfasst, wobei die Kohlenwasserstoffgemische Gemische mit einem Siedebereich von 155 bis 175 °C bei 1x10⁵ Pa absolut umfassen, die in einem Bereich von 99 Gew.-% aus aromatischen Kohlenwasserstoffen mit 9 oder 10 Kohlenstoffatomen bestehen.

10. Mittel nach einem der Ansprüche 1 bis 9, **dadurch gekennzeichnet, dass** das Lösungsmittel Kohlenwasserstoffgemische umfasst, wobei die Kohlenwasserstoffgemische Testbenzin oder ein Petroleumdestillat mit einem Flammpunkt von 38 bis 43 °C umfassen, und wobei das Petroleumdestillat die Kohlenwasserstoffe C₁₀H₂₂ bis C₁₅H₃₂ enthält.

11. Mittel nach einem der Ansprüche 1 bis 10, **dadurch gekennzeichnet, dass** das Mittel mindestens einen Hydrolysekatalysator enthält.

12. Mittel nach Anspruch 11, **dadurch gekennzeichnet, dass** das Mittel 0.1 bis 2% des mindestens einen Hydrolysekatalysator enthält.

13. Mittel nach einem der Ansprüche 11 oder 12, **dadurch gekennzeichnet, dass** der mindestens eine Hydrolysekatalysator ein Salz aus einem Metall und einer Carbonsäure und/oder eine gemischte metallorganische Verbindung, wobei in der Verbindung mindestens ein organischer Rest über ein Kohlenstoffatom direkt an das Metallatom gebunden ist und mindestens ein Rest oder ein lon nicht über ein Kohlenstoffatom an das Metallatom gebunden ist, und/oder ein Titansäureester und/oder ein Kieselsäureester und/oder eine Säure und/oder eine basische organische Stickstoffverbindung enthält.

14. Mittel nach einem der Ansprüche 11 oder 13, **dadurch gekennzeichnet, dass** der mindestens eine Hydrolysekatalysator ein oder mehrere Salze des Cadmiums und/oder Titans und/oder Zirkoniums und/oder Zinns und/oder Bleis und/oder Mangans, Eisens und/oder Cobalt umfassen.

15. Mittel nach einem der Ansprüche 11 bis 14, **dadurch gekennzeichnet, dass** der mindestens eine Hydrolysekatalysator ein Salz aus gemischt metallorganischen Verbindungen umfasst.

16. Mittel nach Anspruch 13, **dadurch gekennzeichnet, dass** die gemischt metallorganischen Verbindungen Dibutylzinndilaurat und/oder Dibutylzinndiacetat umfassen.

17. Mittel nach Anspruch 13, **dadurch gekennzeichnet, dass** der Titansäureester Tetrapropylorthotitanat und/oder Tetraisopropylorthotitanat und/oder Tertrabutylorthotitanat umfasst.

18. Verfahren zur Verbesserung der wärmedämmenden Eigenschaften von anorganischen Materialien unter Verwendung eines Mittels gemäss einem der Ansprüche 1 bis 21 auf Basis von Alkyltrialkoxysilanen und/oder deren ein oder mehreren Ankondensationsprodukten, **dadurch gekennzeichnet, dass** das Mittel durch Sprühen und/oder Fluten auf die zu behandelnden anorganischen Materialien aufgebracht werden.

19. Verfahren zur Verbesserung der wärmedämmenden Eigenschaften von anorganischen Materialien gemäss Anspruch 18, wobei lose Sande und/oder pulverförmige, anorganische Oxide in das Mittel gemäss gemäss einem der Ansprüche 1 bis 21 eingetaucht werden.
